# EUROPÄISCHE PATENTSCHRIFT

(11) **EP 3 044 078 B1**
(45) Veröffentlichungstag und Bekanntmachung des Hinweises auf die Patenterteilung: **20.09.2017**
(21) Anmeldenummer: 14766441.1
(22) Anmeldetag: 10.09.2014
(51) Int. Cl.: B62D 53/08

(54) **DREHPLATEAU FÜR EINEN ZWANGSGELENKTEN AUFLIEGER**
TURNTABLE FOR A FORCIBLY STEERED SEMI-TRAILER
PLATEAU TOURNANT POUR REMORQUE À DIRECTION FORCÉE

(30) Priorität: 10.09.2013 DE 102013218063
(43) Veröffentlichungstag der Anmeldung: 20.07.2016
(73) Patentinhaber: Transport Industry Development Centre B.V., 5692 GA Son (NL)
(72) Erfinder: DOBBELAAR, Jos Robertus Leonardus, NL-5445 PA Landhorst (NL); WILLEMS, Bastiaan Wilhelmus Cornelus, NL-5525 BB Duizel (NL)
(74) Vertreter: Mehler Achler
(86) Internationale Anmeldenummer: PCT/EP2014/069296
(87) Internationale Veröffentlichungsnummer: WO 2015/036436

(56) Entgegenhaltungen:
- DE-U- 6 908 283
- DE-U- 6 909 629
- US-A- 5 201 836
- US-A1- 2002 125 682
- US-B1- 8 157 284

## Beschreibung

Die Erfindung betrifft ein Drehplateau für einen zwangsgelenkten Auflieger eines Sattelzuges, umfassend eine Kranzplatte, die mittels eines Drehkranzes verschwenkbar gegenüber einer Aufliegerplatte gelagert ist, einen Königszapfen, der in eine Sattelkupplung einfahrbar und in dieser verriegelbar ist, einen auf der dem Königszapfen abgewandten Seite der Kranzplatte vorstehenden Lagerzapfen, an welchem ein Lenkgestänge befestigbar ist, und einen Lenkkeilhalter, der an der Kranzplatte angreift und radial zu dem Königszapfen ausgerichtet ist.

Üblicherweise wie z.B in DE 6 908 283 U ist das Drehplateau in die Aufliegerplatte integriert, welche wiederum an der Unterseite des Aufliegerrahmens befestigt ist. Mit der Aufliegerplatte stützt sich der an ein Zugfahrzeug angekuppelte Auflieger auf der Oberseite einer Sattelkupplung des Zugfahrzeugs ab. Eine mechanische und lösbare Verbindung zwischen Auflieger und Zugfahrzeug wird erreicht, indem der Königszapfen, nachdem dieser in die Sattelkupplung eingefahren wurde, mittels einer Verschlussmechanik der Sattelkupplung verriegelt wird.

Die im Fahrbetrieb auftretenden Kräfte werden im Wesentlichen von der Sattelkupplung über den Königszapfen auf den Auflieger übertragen. Hierbei kommt es aufgrund von Relativbewegungen zwischen der Verschlussmechanik und dem Königszapfen auch zu einem Verschleiß des Königszapfens. Aus diesem Grund weist der Königszapfen einen Einschraubteller auf, mit welchem der Königszapfen an der Aufliegerplatte oder der Kranzplatte lösbar angeschraubt ist, so dass ein verschlissener Königszapfen bei Erreichen der Verschleißgrenze ausgetauscht werden kann. Der Nachteil dieser Technologie besteht jedoch darin, dass die Kranzplatte einen ausreichend groß dimensionierten Durchmesser aufweisen muss, um zentrisch den Einschraubteller der Königszapfens aufnehmen zu können. Aufgrund des großen Durchmessers der Kranzplatte wachsen auch die räumlichen Abmessungen des gesamten Drehplateaus. Aufgrund von Restriktionen seitens der Aufliegerhersteller hat es sich bei bestimmten Anwendungsfällen als nachteilig herausgestellt, wenn die Abmessungen des Drehplateaus zu groß sind.

Folglich lag der Erfindung zugrunde, ein möglichst kompakt bauendes Drehplateau für zwangsgelenkte Auflieger bereitzustellen.

Die Aufgabe wird erfindungsgemäß mit einem Drehplateau gelöst, bei dem mindestens die Kranzplatte, der Königszapfen und der Lenkkeilhalter eine integrale Baueinheit bilden.

Hierdurch wird der Vorteil erzielt, dass der Königszapfen ohne das Vorhandensein eines Einschraubtellers in die Kranzplatte integriert ist und die Kranzplatte deshalb mit einem deutlich geringeren Durchmesser ausgeformt sein kann. Dieses ist wiederum besonders für Kühlauflieger interessant, da eine Wärmedämmung im Bereich des Aufliegerbodens über dem Drehplateau nur geringfügig reduziert zu werden braucht.

Unter einer Kranzplatte wird eine ebene Platte mit runder Außenkontur verstanden, in welcher zentrisch der Königszapfen angeordnet ist. Die Lagerung der Kranzplatte erfolgt vorzugsweise ausschließlich über deren Außenkontur mittels daran angreifender oder damit zusammenwirkender Lagerelemente. Hierdurch resultiert der Vorteil, dass keine weiteren, der Lagerung dienenden Bauteile an der Kranzplatte befestigt zu sein brauchen. Der Auflieger kann zumindest teilweise mit der Kranzpatte auf der Oberseite der Sattelkupplung aufliegen. Es ist jedoch bevorzugt, dass die Kranzplatte der integralen Baueinheit nicht auf derselben Ebene wie die Aufliegerplatte liegt, sondern bezüglich einer Sattelkupplung zurückversetzt zu der Aufliegerplatte angeordnet ist. Hierdurch stützt sich die Kranzplatte nicht unmittelbar auf der Sattelkupplung ab und nimmt direkt keine axialen Kräfte auf. Die axiale Kraftrichtung liegt in axialer Erstreckung des Königszapfens. Die integrale Baueinheit im Sinne der Erfindung ist ein einstückiges Bauteil, welches zerstörungsfrei nicht in einzelne Komponenten Kranzplatte und Königszapfen zerlegt werden kann.

In Einbaulage greift der Königszapfen ausschließlich auf der Unterseite an der Kranzplatte an.

Der Drehkranz überträgt ausschließlich die von der Kranzplatte eingeleiteten Kräfte in eine Aufliegerplatte des Aufliegers. Unter einer Aufliegerplatte wird eine ortsfest auf der Unterseite des Aufliegers angeordnete Platte verstanden, die unmittelbar auf einer Sattelkupplung aufliegt. Vorteilhafterweise ist der Drehkranz unmittelbar in eine dafür vorgesehene Ausnehmung des Aufliegers eingesetzt und umgibt diese Ausnehmung in Umfangsrichtung vollständig.

Vorzugsweise ist auch der Lagerzapfen und/oder Lenkkeilhalter Bestandteil der integralen Baueinheit.

Der Lenkkeilhalter bietet später ein Widerlager für den Lenkkeil, der bei angekuppeltem Auflieger in die Einfahröffnung der Sattelkupplung hineinragt und formschlüssig darin gehalten ist. Der Lenkkeilhalter kann direkt oder indirekt an der Kranzplatte angreifen. Zum Überbrücken eines radialen Abstandes zum Königszapfen kann an dem Lenkkeilhalter auch einen Lenkkeilhalterträger angeformt sein.

Hierdurch lässt sich die axiale Länge des Lagerzapfens und damit die Bauhöhe des Drehplateaus weiter reduzieren, da es nicht notwendig ist, den Lagerzapfen mittels anderer Befestigungsmittel an der Kranzplatte anzubringen. Insofern führt das Einbeziehen des Lagerzapfens in die integrale Baueinheit zu dem synergistischen Effekt, dass auch das Drehplateau in seiner Höhe, bezogen auf die vorgesehene Einbaulage, weiter reduziert werden kann. Eine bei einem Kühlauflieger in diesem Bereich befindliche Wärmedämmung braucht daher allenfalls in seiner Dicke reduziert, aber nicht vollständig entfernt werden.

Die integrale Baueinheit kann insbesondere durch stoffschlüssiges Fügen gebildet sein. Hierbei sind die einzelnen Komponenten Kranzplatte, der Königszapfen, der Lenkkeilhalter und gegebenenfalls der Lagerzapfen jeweils als Formteil hergestellt und anschließend unlösbar zum Beispiel durch Schweißnähte miteinander zu einer integralen Baueinheit verbunden.

Ebenso ist es möglich, die integrale Baueinheit als Schmiedestück auszubilden. Unter einem Schmiedestück wird ein Bauteil verstanden, dass durch spanloses Druckumformen von Metallen zwischen zwei Werkzeugen durch Querschnittsveränderung hergestellt ist.

Alternativ hierzu ist es auch möglich, die integrale Baueinheit als Gussbauteil auszubilden. Das Gussbauteil hat den Vorteil, dass an unterschiedlichen Stellen entsprechend der zu erwartenden Belastung die Materialdicke der integralen Baueinheit angepasst werden kann und sich darüber hinaus auf einfache Weise alle gewünschten Radien formen lassen.

Gemäß eines besonders vorteilhaften Ausführungsform weist der Lenkkeilhalter einen Lenkkeilhalterträger auf, welcher an der Kranzplatte angreift. Der Lenkkeilhalterträger ist mit einer rippenförmigen Kontur ausgebildet und kontaktiert mit einer Seite zumindest abschnittsweise vollflächig die Kranzplatte.

Günstigerweise ist der Lenkkeilhalterträger mit einem gegenüber dem Lenkkeilhalter verringerten Querschnitt ausgebildet. In Einbaulage kann sich der Lenkkeilhalterträger nach unten bis maximal auf ein Niveau entsprechend eines oberen Bundes des Königszapfens erstrecken. Der Lenkkeilhalter überragt dann den Lenkkeilhalterträger stets nach unten.

Zweckmäßigerweise greift der Lenkkeilhalterträger zusätzlich an dem Königszapfen an. Hieraus resultiert eine besonders stabile Ausführungsform, da der Lenkkeilhalterträger sowohl an der Kranzplatte als auch an der Umfangswand des Königszapfens befestigt ist.

Vorzugsweise ragt der Lenkkeilhalter mit einem Abschnitt über den Außenumfang der Kranzplatte in radialer Richtung hinaus.

Eine günstige Ausführungsform der Erfindung besteht darin, dass die Kranzplatte einen Durchmesser von 200 mm bis 500 mm aufweist.

Vorteilhafterweise ist in einer Umfangswand der Kranzplatte eine umlaufende Nut eingebracht, in welcher Wälzkörper eines Wälzlagers ablaufen. Durch die Ausformung der Nut unmittelbar in der Umfangswand der Kranzplatte wird die Bauhöhe des Drehplateaus weiter verringert. Das Wälzlager ermöglicht ein reibungsarmes und daher annähernd verschleißarmes Drehen der Kranzplatte gegenüber der Aufliegerplatte. Besonders bevorzugt ist eine Ausführungsform, bei welcher die Umfangswand mit der darin ausgeformten Nut den Innenring und der Drehkranz mit einer entsprechend nach innen offenen Drehkranznut den Außenkranz eines Wälzlagers bilden, wobei die Wälzkörper in dem aus beiden Nuten geformten Kanal eingebracht sind. Gemäß einer alternativen Ausführungsform kann anstelle des Wälzlagers auch ein Gleitlager vorgesehen sein.

Die Erfindung kann auch an einem Auflieger verwirklicht sein, wobei der Auflieger eine oder mehrere Achse(n) mit Achsschenkellenkung aufweist und an der Achsschenkellenkung eine am Lagerzapfen drehbar angreifende Lenkstange befestigt ist. Insbesondere Auflieger mit einer Achse werden häufig als Verteilerfahrzeuge im Stadtverkehr eingesetzt und müssen daher einerseits wendig sein und andererseits verhältnismäßig geringe Lasten transportieren. Die dann vorzugsweise eingesetzte einzige Lenkstange. überträgt die Lageänderung des Lagerzapfens unmittelbar auf die Achsschenkellenkung der Aufliegerachse(n).

Günstigerweise ist der Drehkranz in radialer Richtung vollständig von einer ortsfest am Auflieger befestigten Aufliegerplatte umgeben. Vorteilhafterweise überlappt der Drehkranz die Aufliegerplatte in vertikaler Richtung zumindest teilweise, wodurch sich eine besonders niedrige Bauhöhe realisieren lässt.

In angekuppeltem Zustand des Königszapfens mit einer Sattelkupplung kann der Drehkranz und die Aufliegerplatte auf der Oberseite der Sattelkupplung aufliegen. Aufgrund des geringen Durchmessers des erfindungsgemäßen Drehplateaus stützt sich der Auflieger in vertikaler Richtung sowohl mit dem Drehplateau als auch zusätzlich mit der ortsfest am Auflieger angebrachten und äußerst robust ausgeführten Aufliegerplatte ab. Hierdurch werden die vertikaler Richtung wirkenden Kräfte auch von der Aufliegerplatte getragen und das Drehplateau entsprechend entlastet. Dieses bewirkt eine Entlastung des Wälzlagers und der gesamten integralen Baueinheit.

Besonders bevorzugt ist eine Ausführungsform, bei welcher der Drehkranz in radialer Richtung vollständig von einer ortsfest am Auflieger befestigten Aufliegerplatte umgeben ist und in angekuppeltem Zustand des Königszapfens mit einer Sattelkupplung ausschließlich die Aufliegerplatte auf der Oberseite der Sattelkupplung aufliegt und die Kranzplatte gegenüber der Aufliegerplatte zurückversetzt und beabstandet zu der Oberseite der Sattelkupplung angeordnet ist. Hierdurch werden ausschließlich noch die vom Königszapfen auf die Kranzplatte eingeleiteten Kräfte auf die Aufliegerplatte übertragen. Das Drehplateau ist dagegen frei von axial wirkenden Kräften.

Zum besseren Verständnis wird die Erfindung nachfolgend anhand von sechs Figuren näher erläutert. Es zeigen die
- **Fig. 1**: eine perspektivische Unteransicht auf eine integrale Baueinheit von Kranzplatte, Königszapfen und Lenkkeilhalter;
- **Fig. 2**: eine Draufsicht auf ein in eine Aufliegerplatte eingebautes Drehplateau;
- **Fig. 3**: einen Längsschnitt durch das Drehplateau längs Schnitt A-A in Fig. 2;
- **Fig. 4**: einen Querschnitt durch das Drehplateau längs Schnitt B-B in Fig. 2 und
- **Fig. 5**: einen Querschnitt durch das Drehplateau gemäß einer alternativen Ausführungsform mit zurückversetzter Kranzplatte und
- **Fig. 6:**: eine perspektivische Ansicht auf einen zwangsgelenkten Auflieger mit erfindungsgemäßem Drehplateau.

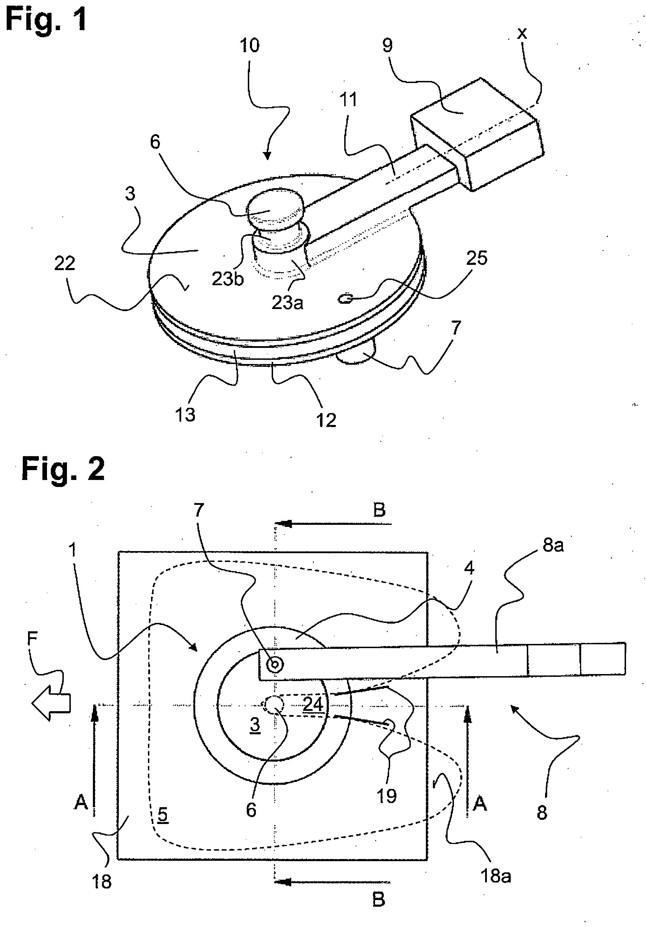

Die Fig. 1 zeigt in einer perspektivischen Unteransicht eine integrale Baueinheit 10 als Bestandteil eines Drehplateaus 1 (siehe Fig. 2) umfassend eine Kranzplatte 3 und einen Königszapfen 6. Der Königszapfen 6 und ein Lenkkeilhalter 9 befinden sich ausschließlich auf der Unterseite 22 der Kranzplatte 3.

Der Lenkkeilhalter 9 weist eine kastenartige Form auf und steht gegenüber der Ebene der Unterseite 22 der Kranzplatte 3 nach unten vor. Eine Mittelachse x des Lenkkeilhalters 9 läuft radial auf den Königszapfen 6 zu. Der Lenkkeilhalter 9 ist ausschließlich über seinen Lenkkeilhalterträger 11 mit der Kranzplatte 3 verbunden. Der Lenkkeilhalterträger 11 weist einen gegenüber dem Lenkkeilhalter 9 verkleinerten Querschnitt auf. Die Unterseite 22 der Kranzplatte 2 liegt vollflächig an einer Seitenfläche des Lenkkeilhalterträgers 11 an und geht fugenlos, das heißt ohne das Vorhandensein einer sichtbaren Trennfuge, in diesen über.

Im Bereich des Königszapfens 6 geht der Lenkkeilhalterträger 11 integral auch in einen oberen Bund 23a des Königszapfens 6 über. In angekuppeltem Zustand eines Aufliegers 2 mit einer Sattelkupplung 18 ragt der Lenkkeilhalterträger 11 in die, bezogen auf die Fahrtrichtung F, nach hinten offene Einfahröffnung 24 hinein (siehe Fig. 2). Bei Geradeausfahrt sind die Fahrtrichtung F und die Mittelachse x des Lenkkeilhalters 9 deckungsgleich. Die nicht gezeigte Verriegelungsmechanik greift in Einbaulage an einem durchmesserkleinen Bund 23b des Königszapfens 6 an, die sich unter dem oberen Bund 23a befindet, und überstreift dabei auch den Lenkkeilhalterträger 11.

Der Lenkkeilhalterträger 11 geht fugenlos in den oberen Bund 23a des Königszapfens 6 über.

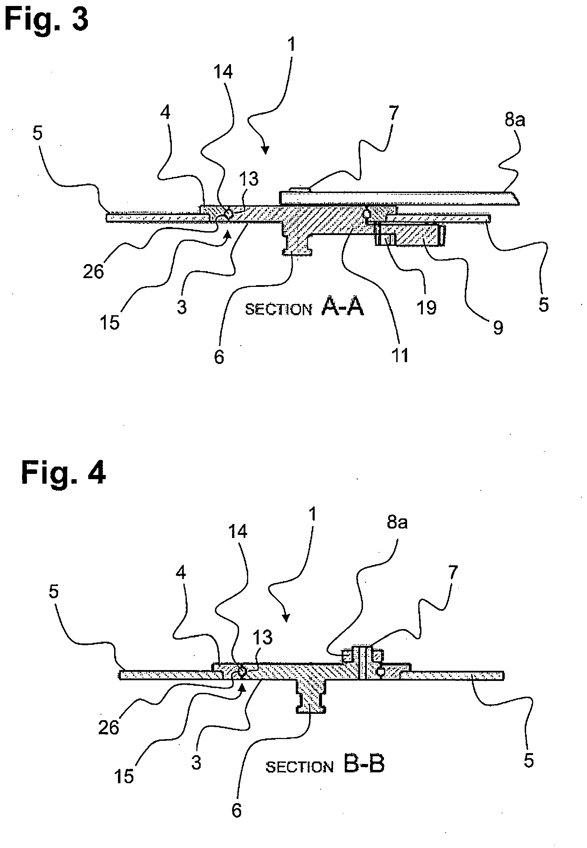

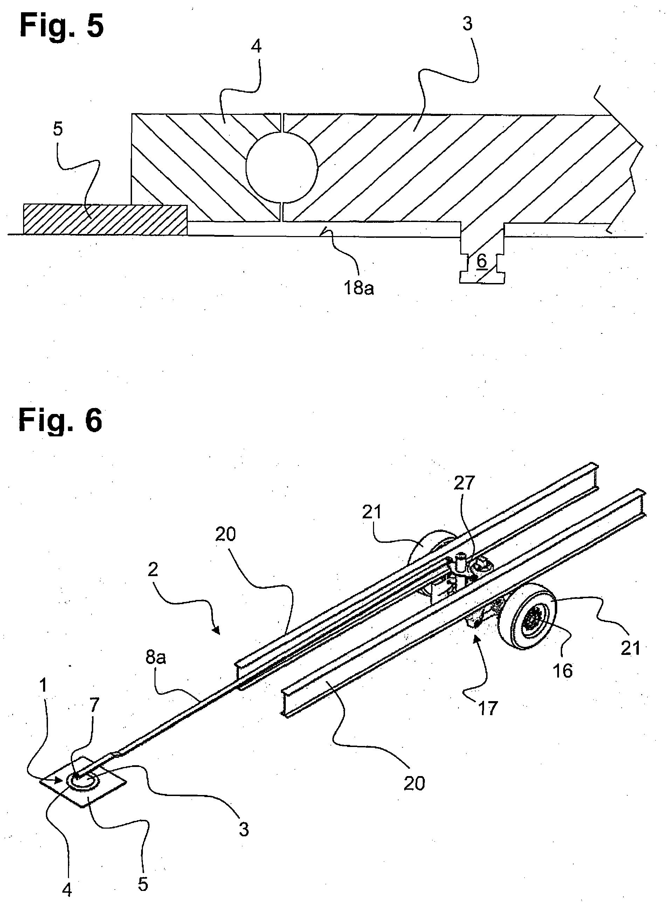

Auf der dem Königszapfen 6 gegenüberliegenden Seite der Kranzplatte 3 steht ein Lagerzapfen 7 vor, an welchem zur Lenkung einer Achse 16 des Aufliegers 2 eine Lenkstange 8a eines Lenkgestänges 8 drehbeweglich befestigt ist (siehe auch Fig. 6). Der Lagerzapfen 7 kann entweder mit der Kranzplatte 3 verschraubt sein oder integraler Bestandteil der Kranzplatte 3 sein, wie in Figuren 1 und 4 dargestellt ist. Ein vollständig durch die Kranzplatte 3 und den Lagerzapfen 7 verlaufendes Montageloch 25 dient der Befestigung der Lenkstange 8a an dem Lagerzapfen 7.

Der Lagerzapfen 7 ist in eingebautem Zustand bei Geradeausfahrt bezüglich der Mittelachse x in einer 90° Position, benachbart zu einer äußeren Umfangswand 12 der Kranzplatte 3 angeordnet. Grundsätzlich sollte der Lagerzapfen 7 in seiner Position bei Geradeausfahrt zumindest in einem Bereich von 80° bis 100° zur Mittelachse x ausgerichtet sein.

In der äußeren Umfangswand 12 verläuft eine Nut 13, welche in eingebautem Zustand des Drehplateaus 1 in eine Aufliegerplatte 5 mit einem Drehkranz 4 zusammenwirkt. Der eingebaute Zustand ist in Fig. 2 dargestellt. Der Drehkranz 4 umgibt sowohl den Königszapfen 6 als auch die Kranzplatte 3 konzentrisch. Aufgrund des äußerst kleinen Durchmessers der Kranzplatte 3, liegt neben dieser auch die Aufliegerplatte 5 des Aufliegers 2 vollflächig auf einer Oberseite 18a der Sattelkupplung 18 auf und stützt sich an dieser ab.

In der Fig. 2 ist darüber hinaus besonders gut die Ausrichtung des Lagerzapfens 7 zu erkennen, welcher bei Geradeausfahrt bezüglich des Königszapfens 6 um 90° seitlich versetzt zur Fahrtrichtung F angeordnet ist. Die an dem Lagerzapfen 7 angreifende Lenkstange 8a verläuft bei Geradeausfahrt annähernd parallel zur Fahrtrichtung F und wird bei Kurvenfahrt aufgrund einer Rotation der Kranzplatte 3 vom Lagerzapfen 7 entweder in Fahrtrichtung F gezogen oder entgegen der Fahrtrichtung F nach hinten gedrückt. Dabei schwenkt die Lenkstange 8a über die Kranzplatte 3 hinweg.

Die Fig. 3 zeigt einen Längsschnitt durch das Drehplateau 1 in eingebautem Zustand, montiert in eine Aufliegerplatte 5, wobei die Schnittebene durch den Königszapfen 6 und den Lenkkeilhalter 9 verläuft. An dem Lenkkeilhalter 9 ist ein Lenkkeil 19 schwenkbar befestigt, welcher im Wesentlichen zwei konisch in Richtung des Königszapfens 6 zulaufende Platten umfasst. In eingefahrenem und verriegeltem Zustand des Königszapfens 6 mit einer Sattelkupplung 18 liegt der Lenkkeil 19 an den seitlichen Wänden der Einfahröffnung 24 an (siehe Fig. 2). Der Lenkkeilhalter 9 befindet sich unter der Aufliegerplatte 5 und schwenkt bei Kurvenfahrt unter dieser hinweg.

In der Schnittdarstellung der Figuren 3 und 4 ist ferner die homogene Materialstruktur von Kranzplatte 3, Königszapfen 6 und Lenkkeilhalter 9 im Sinne einer integralen Baueinheit 10 zu erkennen. Zwischen Kranzplatte 3, Königszapfen 6 und Lenkkeilhalter 9 mit seinem daran angreifenden Lenkkeilhalterträger 11 ist keine Trennfuge vorhanden. In dem Ausführungsbeispiel gemäß Fig. 4 ist zudem der Lagerzapfen 7 in die homogene Baueinheit 10 integriert.

Die Kranzplatte 3 ist konzentrisch innerhalb der Aufliegerplatte 5 mittels eines Wälzlagers 15 drehbar gehalten. Hierfür weist der Drehkranz 4 eine in Richtung der Kranzplatte 3 offene Drehkranznut 26 auf, in welcher mehrere Wälzkörper 14 aufgenommen sind. Die Wälzkörper 14 stützen sich auch an der Nut 13 der Kranzplatte 3 ab.

Die Fig. 5 stellt eine alternative Ausführungsform dar, bei der die Kranzplatte 3 gegenüber der Aufliegerplatte 5 zurückversetzt ist, so dass in angekuppeltem Zustand mit der Sattelkupplung 18 ein Spalt zwischen dessen Oberseite 18a und der Kranzplatte 3 sowie gegebenenfalls dem Drehkranz 4 verbleibt. Die aus der Beladung wirkende Auflast des Aufliegers 2 wird ausschließlich über die Aufliegerplatte 5 auf die Sattelkupplung 18 übertragen. Im Fahrbetrieb, insbesondere bei Kurvenfahrt, schwenkt die Kranzplatte 3 kontaktlos und daher reibungsfrei über die darunterliegende Sattelkupplung 18 hinweg.

Die Fig. 6 zeigt in einer perspektivischen Ansicht wesentliche Bauteile des Aufliegers 2. An zwei parallelen Aufliegerlängsträgern 20 sind mittels der Achse 16 zwei Räder 21 befestigt. Die Achse 16 ist bezüglich der Aufliegerlängsträger 20 ortsfest und lediglich die Räder 21 sind über eine Achsschenkellenkung 17 lenkbar angeordnet. Die Achsschenkellenkung 17 ist drehbeweglich mit der einzigen Lenkstange 8a des Lenkgestänges 8 verbunden, wobei das Lenkgestänge 8 zusätzlich zu der Lenkstange 8a noch weitere nicht gezeigte Lagerbuchsen und/oder einen Schwenkhebel 27 umfasst. Der Schwenkhebel 27 wandelt die annähernd lineare Bewegung der Lenkstange 8 in eine rotatorische Bewegung der Achsschenkellenkung 17 um:

Die Aufliegerplatte 5 ist fest mit einem hier nicht gezeigten, verlängerten Abschnitt der Aufliegerlängsträger 20 verbunden.

### Bezugszeichenliste

- 1: Drehplateau
- 2: Auflieger
- 3: Kranzplatte
- 4: Drehkranz
- 5: Aufliegerplatte
- 6: Königszapfen
- 7: Lagerzapfen
- 8: Lenkgestänge
- 8a: Lenkstange
- 9: Lenkkeilhalter
- 10: integrale Baueinheit
- 11: Lenkkeilhalterträger
- 12: äußere Umfangswand Kranzplatte
- 13: Nut
- 14: Wälzkörper
- 15: Wälzlager
- 16: Achse Auflieger
- 17: Achsschenkellenkung
- 18: Sattelkupplung
- 18a: Oberseite Sattelkupplung
- 19: Lenkkeil
- 20: Aufliegerlängsträger
- 21: Rad
- 22: Unterseite Kranzplatte
- 23a: oberer Bund Köniszapfen
- 23b: durchmesserkleiner Bund Köniszapfen
- 24: Einfahröffnung
- 25: Montageloch
- 26: Drehkranznut
- 27: Schwenkhebel

- F: Fahrtrichtung
- x: Mittelachse Lenkkeilhalter

## Patentansprüche

1. Drehplateau (1) für einen zwangsgelenkten Auflieger (2) eines Sattelzuges, umfassend eine Kranzplatte (3), die mittels eines Drehkranzes (4) verschwenkbar gegenüber einer Aufliegerplatte (5) gelagert ist, einen Königszapfen (6), der in eine Sattelkupplung (18) einfahrbar und in dieser verriegelbar ist, einen auf der dem Königszapfen (6) abgewandten Seite der Kranzplatte (3) vorstehenden Lagerzapfen (7), an welchem ein Lenkgestänge (8) befestigbar ist, und einen Lenkkeilhalter (9), der an der Kranzplatte (3) angreift und radial zu dem Königszapfen (6) ausgerichtet ist,
**dadurch gekennzeichnet,**
**dass** mindestens die Kranzplatte (3) und der Königszapfen (6) eine integrale Baueinheit (10) bilden und in Einbaulage der Königszapfen (6) ausschließlich an der Unterseite der Kranzplatte angreift.

2. Drehplateau (1) nach Anspruch 1, **dadurch gekennzeichnet, dass** der Lagerzapfen (7) und/oder der Lenkkeilhalter (9) Bestandteil der integralen Baueinheit (10) ist.

3. Drehplateau (1) nach Anspruch 1 oder 2, **dadurch gekennzeichnet, dass** die integrale Baueinheit (10) durch stoffschlüssiges Fügen gebildet ist.

4. Drehplateau (1) nach Anspruch 1 oder 2, **dadurch gekennzeichnet, dass** die integrale Baueinheit (10) ein Gussbauteil ist.

5. Drehplateau (1) nach einem der Ansprüche 1 bis 4, **dadurch gekennzeichnet, dass** der Lenkkeilhalter (9) einen Lenkkeilhalterträger (11) aufweist, welcher an der Kranzplatte (3) angreift.

6. Drehplateau (1) nach Anspruch 5, **dadurch gekennzeichnet, dass** der Lenkkeilhalterträger (11) zusätzlich an dem Königszapfen (6) angreift.

7. Drehplateau (1) nach einem der Ansprüche 1 bis 6, **dadurch gekennzeichnet, dass** der Lenkkeilhalter (9) mit einem Abschnitt in radialer Richtung über die äußere Umfangswand (12) der Kranzplatte (3) hinausragt.

8. Drehplateau (1) nach einem der Ansprüche 1 bis 7, **dadurch gekennzeichnet, dass** die Kranzplatte (3) einen Durchmesser von 200 mm bis 500 mm aufweist.

9. Drehplateau (1) nach einem der Ansprüche 1 bis 8, **dadurch gekennzeichnet, dass** in einer Umfangswand (12) der Kranzplatte (3) eine umlaufende Nut (13) eingebracht ist, in welcher Wälzkörper (14) eines Wälzlagers (15) ablaufen.

10. Auflieger (2) mit einem Drehplateau (1) nach einem der Ansprüche 1 bis 9, **dadurch gekennzeichnet, dass** der Auflieger (2) mindestens eine Achse (16) mit einer Achsschenkellenkung (17) aufweist und an der Achssehenkellenkung (17) eine am Lagerzapfen (7) drehbar angreifende Lenkstange (8a) befestigt ist.

11. Auflieger (2) nach Anspruch 10, **dadurch gekennzeichnet, dass** der Drehkranz (4) in radialer Richtung vollständig von einer ortsfest am Auflieger (2) befestigten Aufliegerplatte (5) umgeben ist.

12. Auflieger (2) nach Anspruch 11, **dadurch gekennzeichnet, dass** der Drehkranz (4) und die Aufliegerplatte (5) in vertikaler Richtung zumindest teilweise überlappen.

13. Auflieger (2) nach Anspruch 11 oder 12, **dadurch gekennzeichnet, dass** in angekuppeltem Zustand des Königszapfens (6) mit einer Sattelkupplung (18) der Drehkranz (4) und die Aufliegerplatte (5) auf der Oberseite (18a) der Sattelkupplung (18) aufliegen.

14. Auflieger nach Anspruch 11 oder 12, **dadurch gekennzeichnet, dass** in angekuppeltem Zustand des Königszapfens (6) mit einer Sattelkupplung (18) ausschließlich die Aufliegerplatte (5) auf der Oberseite (18a) der Sattelkupplung (18) aufliegt und die Kranzplatte (3) gegenüber der Aufliegerplatte (5) zurückversetzt und beabstandet zu der Oberseite (18a) der Sattelkupplung (18) angeordnet ist.

## Claims

1. Turntable (1) for a forcibly steered semi-trailer (2) of an articulated vehicle, comprising a cross plate (3) which is mounted in a pivotable manner relative to a semi-trailer plate (5) by means of a swivel head (4), a king pin (6), which is retractable into a fifth-wheel coupling (18) and can be locked therein, a bearing pin (7) which protrudes from the side of the cross plate (3) facing away from the king pin (6) and to which a steering linkage (8) can be attached, and a steering wedge holder (9), which acts on the cross plate (3) and is oriented radially to the king pin (6),
**characterised in that**
at least the cross plate (3) and the king pin (6) form an integral unit (10) and act only on the underside of the cross plate in the mounting position of the king pin (6).

2. Turntable (1) according to claim 1, **characterised in that** the bearing pin (7) and/or the steering wedge holder (9) are components of the integral unit (10).

3. Turntable (1) according to either claim 1 or claim 2, **characterised in that** the integral unit (10) is formed by integrally bonded joining.

4. Turntable (1) according to either claim 1 or claim 2, **characterised in that** the integral unit (10) is a cast component.

5. Turntable (1) according to any one of claims 1 to 4, **characterised in that** the steering wedge holder (9) has a steering wedge holder support (11), which acts on the cross plate (3).

6. Turntable (1) according to claim 5, **characterised in that** the steering wedge holder support (11) additionally acts on the king pin (6).

7. Turntable (1) according to any one of claims 1 to 6, **characterised in that** a portion of the steering wedge holder (9) projects in the radial direction beyond the outer peripheral wall (12) of the cross plate (3).

8. Turntable (1) according to any one of claims 1 to 7, **characterised in that** the cross plate (3) has a diameter of from 200 mm to 500 mm.

9. Turntable (1) according to any one of claims 1 to 8, **characterised in that** a circumferential groove (13) is made in a peripheral wall (12) of the cross plate (3), inside which rolling elements (14) of a rolling bearing (15) run.

10. Semi-trailer (2) comprising a turntable (1) according to any one of claims 1 to 9, **characterised in that** the semi-trailer (2) has at least one axle (16) comprising an axle steering device (17), to which axle steering device (17) a steering bar (8a), which rotatably acts on the bearing pin (7), is attached.

11. Semi-trailer (2) according to claim 10, **characterised in that** the slewing ring (4) is completely enclosed by a semi-trailer plate (5) that is attached to the semi-trailer (2) in a stationary manner.

12. Semi-trailer (2) according to claim 11, **characterised in that** the slewing ring (4) and the semi-trailer plate (5) overlap at least in part in the vertical direction.

13. Semi-trailer (2) according to either claim 11 or claim 12, **characterised in that**, when the king pin (6) is coupled to a fifth-wheel coupling (18), the slewing ring (4) and the semi-trailer plate (5) rest on the upper side (18a) of the fifth-wheel coupling (18).

14. Semi-trailer according to either claim 11 or claim 12, **characterised in that**, when the king pin (6) is coupled to a fifth-wheel coupling (18), only the semi-trailer plate (5) rests on the upper side (18a) of the fifth-wheel coupling (18), and the cross plate (3) is arranged so as to be set back from the semi-trailer plate (5) and at a distance from the upper side (18a) of the fifth-wheel coupling (18).

## Revendications

1. Plateau tournant (1) pour une semi-remorque (2) à direction forcée d'un train routier articulé,
comprenant une plaque à couronne (3), qui est montée pivotante par rapport à une plaque de semi-remorque (5) au moyen d'une couronne de pivotement (4), un pivot d'attelage (6), qui peut être introduit dans une sellette d'attelage (18) et verrouillé dans celle-ci, un tourillon (7), qui dépasse sur le côté de la plaque à couronne (3) opposé au pivot d'attelage (6) et sur lequel une timonerie de direction (8) peut être fixée, et un support de coin de direction (9), qui agit sur la plaque à couronne (3) et est orienté radialement par rapport au pivot d'attelage (6),
**caractérisé en ce qu'**au moins la plaque à couronne (3) et le pivot d'attelage (6) forment un sous-ensemble de construction intégré (10) et, en position d'installation, le pivot d'attelage (6) agit exclusivement sur le côté inférieur de la plaque à couronne.

2. Plateau tournant (1) selon la revendication 1, **caractérisé en ce que** le tourillon (7) et/ou le support de coin de direction (9) font partie du sous-ensemble de construction intégré (10).

3. Plateau tournant (1) selon la revendication 1 ou 2, **caractérisé en ce que** le sous-ensemble de construction intégré (10) est formé par assemblage par liaison de matière.

4. Plateau tournant (1) selon la revendication 1 ou 2, **caractérisé en ce que** le sous-ensemble de construction intégré (10) est une pièce moulée en fonte.

5. Plateau tournant (1) selon l'une des revendications 1 à 4, **caractérisé en ce que** le support de coin de direction (9) présente un élément porteur (11) de support de coin de direction, qui agit sur la plaque à couronne (3).

6. Plateau tournant (1) selon la revendication 5, **caractérisé en ce que** l'élément porteur (11) de support de coin de direction agit en outre sur le pivot d'attelage (6).

7. Plateau tournant (1) selon l'une des revendications 1 à 6, **caractérisé en ce que** le support de coin de direction (9) dépasse par une partie, en direction radiale, de la paroi périphérique extérieure (12) de la plaque à couronne (3).

8. Plateau tournant (1) selon l'une des revendications 1 à 7, **caractérisé en ce que** la plaque à couronne (3) présente un diamètre de 200 mm à 500 mm.

9. Plateau tournant (1) selon l'une des revendications 1 à 8, **caractérisé en ce qu'**une rainure entourante (13) est pratiquée dans une paroi périphérique (12) de la plaque à couronne (3), rainure dans laquelle roulent des corps de roulement (14) d'un palier à roulement (15).

10. Semi-remorque (2) avec un plateau tournant (1) selon l'une des revendications 1 à 9, **caractérisée en ce que** la semi-remorque (2) présente au moins un essieu (16) avec un système de direction (17) de fusée d'essieu, et une bielle de direction (8a) agissant à rotation sur le tourillon (7) est fixée sur le système de direction (17) de fusée d'essieu.

11. Semi-remorque (2) selon la revendication 10, **caractérisée en ce que** la couronne de pivotement (4) est entièrement entourée en direction radiale par une plaque de semi-remorque (5) fixée à poste fixe sur la semi-remorque (2).

12. Semi-remorque (2) selon la revendication 11, **caractérisée en ce que** la couronne de pivotement (4) et la plaque de semi-remorque (5) se chevauchent au moins partiellement en direction verticale.

13. Semi-remorque (2) selon la revendication 11 ou 12, **caractérisée en ce que**, dans l'état attelé du pivot d'attelage (6) avec une sellette d'attelage (18), la couronne de pivotement (4) et la plaque de semi-remorque (5) reposent sur le côté supérieur (18a) de la sellette d'attelage (18).

14. Semi-remorque selon la revendication 11 ou 12, **caractérisée en ce que**, dans l'état attelé du pivot d'attelage (6) avec une sellette d'attelage (18), seule la plaque de semi-remorque (5) repose sur le côté supérieur (18a) de la sellette d'attelage (18), et la plaque à couronne (3) est disposée en retrait par rapport à la plaque de semi-remorque (5) et à distance du côté supérieur (18a) de la sellette d'attelage (18).
